Europäisches Patentamt

European Patent Office

Office européen des brevets

(19)

(11) Veröffentlichungsnummer : **0 324 416 B1**

(12)                    EUROPÄISCHE PATENTSCHRIFT

(45) Veröffentlichungstag der Patentschrift :
    **15.04.92 Patentblatt 92/16**

(51) Int. Cl.[5] : **C08L 33/06,** C09D 5/34,
    // (C08L33/06, 33:02)

(21) Anmeldenummer : **89100300.6**

(22) Anmeldetag : **10.01.89**

(54) **Bindemittel für klebfreie, nicht schmutzende, elastische Beschichtungen.**

(30) Priorität : **15.01.88 DE 3800984**

(43) Veröffentlichungstag der Anmeldung :
    **19.07.89 Patentblatt 89/29**

(45) Bekanntmachung des Hinweises auf die
    Patenterteilung :
    **15.04.92 Patentblatt 92/16**

(84) Benannte Vertragsstaaten :
    **AT BE CH DE ES FR GB GR IT LI NL SE**

(56) Entgegenhaltungen :
    **EP-A- 0 180 319**
    **DE-A- 3 034 171**
    **GB-A- 2 005 697**

(73) Patentinhaber : **BASF Aktiengesellschaft**
    **Carl-Bosch-Strasse 38**
    **W-6700 Ludwigshafen (DE)**

(72) Erfinder : **Beckerle, Wilhelm Friedrich**
    **Beethovenstrasse 20 1/2**
    **W-6712 Bobenheim-Roxheim (DE)**
    Erfinder : **Dragon, Andree**
    **Speyerer Strasse 111**
    **W-6703 Limburgerhof (DE)**
    Erfinder : **Franzmann, Gernot, Dr.**
    **Im Woogtal 13**
    **W-6719 Bobenheim (DE)**
    Erfinder : **Matthaei, Lothar**
    **Am Westring 42**
    **W-6714 Weisenheim (DE)**
    Erfinder : **Wistuba, Eckehardt, Dr.**
    **Im Obergarten 7**
    **W-6702 Bad Duerkheim (DE)**
    Erfinder : **Teichmann, Helmut**
    **Hammelstalstrasse 25**
    **W-6702 Bad Duerkheim (DE)**

## Beschreibung

Die vorliegende Erfindung betrifft wäßrige Polymerdispersionen, die als Bindemittel für elastische Beschichtungen mit geringer Klebrigkeit und somit geringer Verschmutzungsneigung eingesetzt werden können.

Elastische Beschichtungen werden zum Schutz der Bausubstanz vertikal an Wänden und horizontal auf Dächern aufgetragen. Bevorzugt werden elastische Beschichtungen zur Sanierung bei rissigen Fassaden eingesetzt. Von den Beschichtungsmaterialien wird verlangt, daß sie die Risse dauerhaft elastisch überdecken, so daß kein Wasser in die Wand bzw. ins Dach eindringen kann. Da diese Materialien im Außenbereich eingesetzt werden, müssen die verwendeten Bindemittel wasser-, verseifungs- und wetterfest (UV-Strahlung) sein und müssen darüber hinaus ein dauerhaftes elastisches Verhalten aufweisen, das bis zu Temperaturen von -15°C wirksam sein muß. Üblicherweise wird das elastische Tieftemperaturverhalten mit Hilfe der Reißkraft und Reißdehnungswerte bei -10°C charakterisiert. Die Reißdehnung einer pigmentierten Beschichtung (PVK üblicherweise bei 15 bis 35 %) sollte bei etwa 100 % liegen. Aufgrund des geforderten mechanischen Verhaltens bei tiefen Temperaturen müssen die in Frage kommenden Polymeren, die in den Bindemitteln für diese elastischen Beschichtungen enthalten sind, niedrige Glastemperaturen, die im Bereich bis -20°C liegen, aufweisen. Daraus folgt, daß die aufgrund ihrer Wetterbeständigkeit geeigneten Bindemittel häufig klebrige Filme ergeben, die leicht verschmutzen.

Klebfreie, nichtschmutzende Filme, die auch gute Tieftemperatur-Elastizität aufweisen, können mit Hilfe von Naturkautschuklatex bzw. Butadien-haltigen Polymeren erhalten werden. Auch sind aus der EP-A- 0 180 319 Bindemittel für wasserfeste Beschichtungen bekannt, die aus einem unlöslichen Latex-Polymer und einem wasserlöslichen Zinkaminkomplexsalz bestehen. Bei diesen Zinkaminkomplexsalzen handelt es sich jedoch nicht um solche polymerer Carbonsäuren. Diese Bindemittel sind nicht UV-stabil, d.h. sie bauen bei der Bewitterung ab, verspröden und kreiden; z.T. können die Abbauprodukte sogar klebrig sein. Derartige Bindemittel sind daher ungeeignet.

Auf dem Markt sind Bindemittel auf Acrylatbasis, mit denen durch Licht vernetzbare Beschichtungen hergestellt werden können, die klebfreie Oberflächen aufweisen. Diese Licht-vernetzbaren Beschichtungen zeigen jedoch den Nachteil, daß sie im Schattenbereich, z.B. unter Dach- und Balkonvorsprüngen nicht oder weniger klebfrei auftrocknen, so daß diese Stellen zur Verschmutzung neigen.

In GB-A 2005697 sind Film-bildende Polymere für Beschichtungen beschrieben, die aus eine. Dispersion von Pigment in einem wasserlöslichen zinkamminsalz eine polymeren Carbonsäure bestehen.

Weiterhin ist aus der DE-AS 23 37 606 schon ein korrosionsinhibierendes wäßriges Anstrichmittel bekannt, das ein synthetisches Polymeres, das in Wasser bei pH 3 bis 11 unlöslich ist, und eine Metallkomplexverbindung, wie besonders Zink-ammonium-carbonat, das in Wasser unlöslich ist, in Mengen von 0,2 bis 20 mMol/Mol Wasser suspendiert enthält. Filme aus derartigen Anstrichmitteln werden jedoch aufgrund von Unverträglichkeiten zum Teil trüb, und bei hohen Dosierungen kann es zu weißen Ausblühungen kommen. Diese Zinksalzvernetzung bewirkt jedoch keinen großen Effekt auf die Verschmutzungsneigung und wurde nicht für Polymere beschrieben, deren Glastemperaturen im Bereich von etwa -20 bis 0°C liegen.

Der vorliegenden Erfindung liegt nun die Aufgabe zugrunde, ein Bindemittel für elastische Beschichtungen, das frei von oben genannten Nachteilen ist, zur Verfügung zu stellen.

Es wurde gefunden, daß sich Bindemittel auf Basis von wäßrigen Copolymer-Dispersionen die Zinkaminkomplexe enthalten, sich besonders gut für klebfreie nicht schmutzende und elastische Beschichtungen eignen, wenn sie im wesentlichen aus

A) 90 bis 99 Gew.% einer wäßrigen Dispersionen von (Meth)acrylsäureester-Copolymeren einer Glastemperatur (Tg) von -40 bis -1°C und

B) 1 bis 10 Gew.% eines wasserlöslichen Zinkamin-Komplexsalzes einer polymeren Carbonsäure,

bestehen, wobei die Angaben in Gew.% auf die gesamte Polymerisatmenge der Komponenten A) und B) bezogen sind, und die Copolymerisate der Komponente A) vorzugsweise einen mittleren Teilchendurchmesser von 0,01 bis 0,5 μm haben.

Die als Komponente A) geeigneten wäßrigen (Meth)acrylsäurealkylester-Copolymerisat-Dispersionen einer Tg von -40 bis -1°C, deren Copolymerisate vorzugsweise einen mittleren Teilchendurchmesser von 0,01 bis 0,5 μm haben, enthalten im allgemeinen mindestens 70 Gew.%, bezogen auf das Polymerisat, an (Meth)acrylsäurealkylestern einpolymerisiert, die sich im allgemeinen von 2 bis 12 C-Atome enthaltenden Alkanolen, vorzugsweise von 4 bis 8 C-Atome enthaltenden Alkanolen, wie n-Butanol, Isobutanol und/oder 2-Ethylhexanol, ableiten. Als Comonomere kommen in Mengen bis zu 30 Gew.% Vinylester, wie Vinylacetat und Vinylpropionat sowie Styrol, Methylmethacrylat, Cyclohexylacrylat, Methylacrylat, sowie gegebenenfalls bis zu 18 Gew.% Acrylnitril und/oder Vinylchlorid oder Vinylidenchlorid sowie in Mengen von 0,5 bis 5 Gew.%, insbesondere von 0,5 bis 4 Gew.%, meist 3 bis 5 C-Atome enthaltende α,ß-monoolefinisch ungesättigte Mono- und/oder Dicarbonsäuren, wie Acrylsäure, Methacrylsäure, Crotonsäure, Itakonsäure oder Maleinsäure, sowie ferner deren gegebenenfalls an den Stickstoffatomen substituierte Amide, wie Acrylamid, Methacrylamid, N-Methylacrylamid, N-Methylmethacrylamid, N-Methylolacrylamid und -methacrylamid, Maleinsäureimid und Maleinsäuremonoethylester in Frage. Weiterhin können die Copolymeren vorzugsweise 0,5 bis zu 4 Gew.% mehrfach $\alpha,\beta$-ethylenisch ungesättigte Monomere oder $\alpha,\beta$-ethylenisch ungesättigte, Carbonylgruppen-haltige Monomere, wie Diacetonacrylamid und Butanon-2-methacrylat, einpolymerisiert enthalten. Die Carbonylgruppen enthaltenden Copolymerisate können nach ihrer Herstellung mit 0,8 bis 1,2 Val/Val Carbonylgruppe Dihydrazidverbindungen, wie Adipinsäuredihydrazid, versetzt werden. vorzugsweise kann die Komponente A) der erfindungsgemäßen Bindemittel bis zu 4 Gew.-% einer polyfunktionellen $\alpha,\beta$-ethylenisch ungesättigten verbindung einpolymerisiert enthalten. Derartige Komponenten (A) bilden bei der Filmbildung vernetzte Filme, die erhöhte Elastizität und verminderte Verschmutzungsneigung zeigen. Von besonderem Interesse sind Dispersionen von Copolymerisaten aus 70 bis 91 % ihres Gewichts n-Butylacrylat und/oder 2-Ethylhexylacrylat, 28 bis 7 % ihres Gewichts Styrol, 1 bis 3 % ihres Gewichts Acryl- und/oder Methacrylsäure und 1 bis 2,5 % ihres Gewichts Acryl- und/oder Methacrylamid. Derartige Copolymerisate haben vorzugsweise eine Tg von -40 bis -16°C und können in an sich üblicher Weise hergestellt sein. Sie enthalten im allgemeinen die üblichen nichtionischen Emulgiermittel, wie ethoxylierte Alkylphenole (EO-Gehalt 5 bis 30), sowie gegebenenfalls zusätzlich bis zu 80 Gew.%, vorzugsweise 25 bis 75 %, bezogen auf die Gesamtmenge der Emulgiermittel, übliche organische Emulgiermittel, wie sulfierte ethoxilierte Alkylphenole (EO-Gehalt 5 bis 25) und Alkylsulfate, wobei die Gesamtmenge der Emulgiermittel, bezogen auf das Copolymerisat, meist 1,5 bis 6 Gew.% beträgt. Zusätzlich können sie übliche Schutzkolloide sowie gegebenenfalls weitere Hilfsstoffe enthalten. Die Dispersionen weisen meist Feststoffgehalte von 20 bis 60, insbesondere von 40 bis 55 Gew.% auf, und die K-Werte der Copolymerisate, gemessen nach DIN 53 276 in Tetrahydrofuran bei Raumtemperatur, betragen meist 35 bis 90. Der besonders bevorzugte Teilchengrößenbereich beträgt 0,05 bis 0,25 µm und die Viskositäten der 50 %igen Dispersionen betragen meist 2500 bis 50, vorzugsweise 2000 bis 100 mPas. Der mit $NH_3$ eingestellte pH-Wert der erfindungsgemäß zu verwendenden Copolymerisatdispersionen liegt im allgemeinen bei 7 bis 11, oft bei 8 bis 10.

Als Komponente (B) wird eine wäßrige Lösung eines Zinkaminkomplexsalzes einer polymeren Carbonsäure eingesetzt, deren K-Wert, gemessen nach DIN 53 726 in THF bei Raumtemperatur, meist 8 bis 40, bevorzugt 10 bis 25, beträgt. Die polymere Carbonsäure enthält meist 20 bis 100 Gew.% einer oder mehrerer $\alpha,\beta$-monoethylenisch ungesättigter Mono- und/oder Dicarbonsäuren, die wie Acrylsäure, Methacrylsäure, Itakonsäure und Maleinsäureanhydrid meist 3 bis 5 C-Atome enthalten und 0 bis 80 Gew.% andere, in Wasser unlösliche $\alpha,\beta$-monoethylenisch ungesättigte Monomere, wie (Meth)acrylsäureester, die sich z.B. von 1 bis 12 C-Atome enthaltenden Alkanolen, wie Methanol, Ethanol, Isopropanol, n-Butanol und/oder Isobutanol ableiten, Styrol und/oder Acrylnitril einpolymerisiert. Von besonderem Interesse sind Copolymerisate, die 35 bis 60 Gew.% Acrylsäure und/oder Methacrylsäure sowie 65 bis 40 Gew.% Styrol einpolymerisiert enthalten. Derartige Copolymerisate haben vorzugsweise Säurezahlen von 210 bis 500 mg KOH/g. Sie können in an sich üblicher Weise als Substanz oder Lösungspolymerisat hergestellt sein. Bevorzugt werden sie nach dem in der DE-OS 30 34 171 beschriebenen Verfahren hergestellt. Die Überführung dieser festen Copolymerisate in die gelöste Form kann durch Lösen dieser Harze in ammoniak- oder aminhaltigem Wasser erfolgen. Als Amine kommen hierfür Alkyl- und Hydroxylalkylamine, wie Ethanolamin, Triethylamin, Ethyldimethylamin und Triethanolamin in Frage; bevorzugt wird Ammoniak eingesetzt. Der Ammoniak- bzw. Amingehalt wird vorzugsweise so gewählt, daß die Lösung, bezogen auf den Carboxylgruppengehalt einen 2- bis 6-molaren Überschuß enthält. In diese alkalische Polymerlösung werden, bezogen auf die Carboxylatgruppen, im allgemeinen 0,8 bis 1,2 äquivalente Zinkoxid eingetragen und im allgemeinen unter Rühren bei Temperaturen von 10 bis 90°C, gegebenenfalls unter Druck, gelöst.

Die Herstellung der erfindungsgemäßen Bindemittel für elastische nicht verschmutzende Beschichtungen erfolgt im allgemeinen durch Mischen der gegebenenfalls mit Wasser verdünnten Komponente (B) mit der Komponente (A), indem vorzugsweise die Komponente (B) unter Rühren in die Komponente (A) gegeben wird. Dabei hat es sich als günstig erwiesen, der Komponente (A) vor der Zugabe der Komponente (B) 0,5 bis 4 Gew.% Glykolether, z.B. Reaktionsprodukte von $C_1$- bis $C_4$-Alkanolen mit Ethylenoxid und/oder Propylenoxid, wie Butylglykol, Butyldiglykol und Dipropylenglykolmonomethylether (Isomerengemisch) zuzusetzen.

Der überschüssige Ammoniak bzw. das überschüssige Amin kann gegebenenfalls abgedampft oder chemisch, z.B. mit Formaldehyd, gebunden werden.

Es ist besonders überraschend, da auch die erfindungsgemäßen Bindemittel, die aus einer carboxylgruppenfreien Komponente (A) und der Komponente (B) hergestellt sind, vernetzen und klebfreie Filme ergeben.

Die erfindungsgemäßen Gemische können mit besonderem Vorteil als Bindemittel zur Herstellung von elastischen Beschichtungen für horizontale und vertikale Flächen, wie Dachhäute und rißüberbrückende Systeme, angewendet werden, die wenig verschmutzen. Die Pigmentierung kann mit den üblichen Pigmenten und Füllstoffen erfolgen, die PVK (Pigmentvolumenkonzentration) liegt im allgemeinen im Bereich von 10 bis 50 %, bevorzugt 20 bis 35 %.

Als Füllstoffe eignen sich z.B. Calcite, Dolomite, Schwerspat und Talkum, als Pigment, z.B. TiO$_2$.

Zur Filmbildung können übliche Filmbildehilfsmittel, wie Glykolether, Testbenzine und Ester in Mengen von 1 bis 5 Gew.%, bezogen auf 50 %ige Polymerdispersion, mitverwendet werden.

Weitere Hilfsmittel sind übliche Verdicker, z.B. auf Polyurethanbasis, und übliche Entschäumer, z.B. auf Silikon- oder Mineralölbasis.

Die in den folgenden Beispielen angegebenen Teile und Prozente beziehen sich auf das Gewicht, die darin angegebenen K-Werte wurden nach DIN 53 276 in Tetrahydrofuran bei Raumtemperatur gemessen.

Beispiel 1

a) Herstellung des polymeren Zinkaminkomplexsalzes

In einem beheizbaren druckfesten Rührkessel legt man 55,8 Teile einer 25 %igen wäßrigen Ammoniaklösung vor und löst darin unter Rühren 34,4 Teile eines nach den Angaben der DE-OS 30 34 171 hergestellten Copolymerisats aus 60 Teilen Styrol und 40 Teilen Acrylsäure des K-Werts 12. In die Lösung trägt man unter Rühren 9,7 Teile Zinkoxid (Qualität: Rotziegel) ein, verschließt den Kessel und erhitzt auf 55°C. Nach Erreichen dieser Temperatur rührt man noch 3 Stunden, entspannt den Kessel und kühlt auf Raumtemperatur ab. Man erhält eine 45 %ige wäßrige Lösung des polymeren Zinkaminkomplexes.

b) Herstellung des elastischen Bindemittels

96 Teile einer 50 %igen wäßrigen Dispersion eines Copolymerisats aus 40 Teilen n-Butylacrylat, 40 Teilen 2-Ethylhexylacrylat und 20 Teilen Styrol, die mit folgendem Hilfsstoffsystem: 3 % Acrylsäure, 1 % Acrylamid, 1,5 % C$_{12}$-Alkylsulfat und 1,5 % ethoxiliertes Octylphenol (EO-grad: 25) hergestellt wurde, werden in einem Rührkessel vorgelegt. Man gibt dann innerhalb von 10 Minuten 4 Teile der gemäß a) hergestellten wäßrigen Lösung des polymeren Zinkaminkomplexes zu und erhält eine 49,8 %ige Dispersion, deren pH-Wert 9,4 beträgt und deren Filme folgende Eigenschaften haben:

```
Wasseraufnahme nach 24 Stunden:    16 %       (nach DIN 53 495)
Reißkraft bei -10°C           :    13,6 N/mm³ (nach DIN 53 455)
Reißdehnung bei -10°C         :    410 %
Klebrigkeit des Films bei 23°C:    0-1        (nach DIN 53 230)
```

c) Herstellung einer elastischen Beschichtung

Die folgenden Bestandteile werden in der angegebenen Reihenfolge unter Rühren gemischt:

EP 0 324 416 B1

| | | |
|---|---|---|
| Wasser | 35,0 | Teile |
| 25 %ige wäßrige N-Polyphosphatlösung | 3,0 | " |
| 30 %ige wäßrige Lösung von Polyacrylat-Ammoniumsalz | 2,0 | " |
| handelsübliches Konservierungsmittel | 3,0 | " |
| handelsüblicher Entschäumer auf Silikonbasis | 2,0 | " |
| 25 %ige wäßrige Ammoniaklösung | 2,0 | " |
| Celluloseether | 3,0 | " |
| Dispersion aus Beispiel 1b | 300,0 | " |
| $TiO_2$ (Rutiltyp) | 35,0 | " |
| Talkum | 40,0 | " |
| Kreide | 120,0 | " |
| blättchenförmiges Al-Silikat | 80,0 | " |
| feinteiliges Siliciumdioxid | 5,0 | " |
| Testbenzin 180/120°C | 10,0 | " |
| Butylestergemisch der Bernstein-, | 8,0 | " |
| Glutar- und Adipinsäure | | |
| Entschäumer auf Silikonbasis | 2,0 | " |
| Dispersion aus Beispiel 1b | 350,0 | " |

Kenndaten der elastischen Beschichtung bei einer Beschichtungsdicke von 500 μm:
Reißkraft bei -10°C : 9,8N/mm$^2$
Reißdehnung bei -10°C : 165%
Verschmutzung* bei 23°C : 0-1

Beispiel 2

Herstellung des elastischen Bindemittels

96 Teile einer 50 %igen wäßrigen Dispersion eines Copolymerisats aus 79,5 Teilen n-Butylacrylat, 17 Teilen Styrol, 1,5 Teilen Acrylamid, 2 Teilen Diacetonacrylamid, das 1 Teil Adipinsäuredihydrazid enthält und mit Hilfe von 1,5 % bezogen auf Polymer von sulfiertem und ethoxilierten Nonylphenol (EO:25) als Emulgator hergestellt wurde, werden in einem Rührkessel vorgelegt. Innerhalb von 10 Minuten werden 4 Teile des unter Beispiel 1a) angegebenen Zinkaminkomplexes zugegeben. Man erhält eine 49,7 %ige Dispersion, deren pH-Wert 9,6 beträgt.
Kenndaten der daraus hergestellten Filme einer Dicke von 500 μm

| | | |
|---|---|---|
| Wasseraufnahme nach 24 Stunden | : | 18 % |
| Reißkraft bei -10°C | : | 9,2 N/mm$^3$ |
| Reißdehnung bei -10°C | : | 420 % |
| Klebrigkeit des Film bei 23°C | : | 1 |

Herstellung einer elastischen Beschichtung

Die Herstellung erfolgte nach dem in Beispiel 1c) beschriebenen Rezept.
Kenndaten einer Beschichtung einer Dicke von 500 μm
Reißkraft bei -10°C : 6,5N/mm$^3$
Reißdehnung bei -10°C : 290 %
Verschmutzung * bei 23°C : 1
*10g Eisenoxidschwarz werden auf die Beschichtung aufgesiebt. Nach einer Lagerung von 1 Stunde bei 23°C wird das Eisenoxid abgeschüttelt. Mit einem feuchten Schamm wird 5 mal gewischt. Die verbleibende Eiseno-

5

xideschwarz-Menge wird als Verschmutzung beurteilt.
0 = keine Anhaftung von Eisenoxid
5 = sehr starke Anhaftung (schwarzer Fleck).

Herstellung einer elastischen Dachhaut

| | |
|---|---|
| Dispersion aus Beispiel 2b) | 56,7 Teile |
| Polyetherderivat einer Fettsäure | 1,4 " |
| TiO$_2$ (Rutiltyp) | 3,4 " |
| Kreide | 27,9 " |
| Bariumsulfat | 10,2 " |
| handelsüblicher Polyurethanverdicker | 0,4 " |
| (5 %ige wäßrige Lösung) | |

Die getrocknete Dachhaut hat folgende Kenndaten bei einer Dicke von 500 μm.

| | | |
|---|---|---|
| Reißkraft bei 23°C trocken | 1,90 | N/mm$^2$ |
| Reißkraft bei -10°C trocken | 5,8 | N/mm$^2$ |
| Reißkraft bei -20°C trocken | 11,86 | N/mm$^2$ |
| Reißdehnung 23°C trocken | 237 | % |
| -10°C trocken | 186 | % |
| -20°C trocken | 70 | % |

| | | |
|---|---|---|
| Wasseraufnahme nach 48 Stunden | 6,3 | % |
| 96 Stunden | 9,4 | % |
| 2 Wochen | 22 | % |
| 4 Wochen | 31 | % |
| Verschmutzung | 0 - 1 | |

Beispiel 3

a) Herstellung des polymeren Zinkaminkomplexsalzes

Man legt 44,75 Teile 25 %ige wäßrige Ammoniaklösung vor und löst darin 34,4 Teile eines nach den Angaben der DE-OS 30 34 171 hergestellten Copolymerisates aus 60 Teilen Styrol, 30 Teilen Acrylsäure und 10 Teilen Maleinsäureanhydrid vom K-Wert 15. Zu der Lösung gibt man 8,9 Teile Zinkoxid (Rot-Ziegel) und verfährt wie in Beispiel 1 unter a) angegeben.

b) Herstellung des elastischen Bindemittels

95 Teile einer 50 %igen wäßrigen Dispersion eines Copolymerisats aus 36 Teilen 2-Ethylhexylacrylat, 42 Teilen n-Butylacrylat, 22 Teilen Methylmethacrylat, und 2,5 % Acrylsäure, die mit Zusatz von 1 %, bezogen auf die Monomerenmenge, Octylphenol (EO-Grad: 25) hergestellt ist, werden in einem Rührkessel vorgelegt und innerhalb von 10 Minuten mit 5 Teilen des unter 3 a) beschriebenen Zinkaminkomplexes versetzt.
Kennandaten eines 500 μm dicken Films aus der Dispersion:

| | |
|---|---|
| Feststoffgehalt | 49,7 % |
| pH-Wert | 9,7 |
| Reißkraft bei -10°C | 21 N/mm$^2$ |
| Reißdehnung bei -10°C | 190% |
| Wasseraufnahme nach 24 h | 25 °C |

6

Klebrigkeit                    0 (1 J/m²)

Beispiel 4

a) Herstellung des polymeren Zinkaminkomplexsalzes

Man legt 28 Teile 25 %ige wäßrige Ammoniaklösung vor und löst darin unter Rühren 34,4 Teile eines nach den Angaben der DE-OS 30 34 171 hergestellten Copolymerisats aus 60 Teilen Methylmethacrylat, 15 Teilen Methylacrylat und 25 Teilen Acrylsäure. In diese Lösung trägt man unter Rühren 4,85 Teile Zinkoxid (Rot-Ziegel) ein und verfährt weiter, wie in Beispiel 1 unter a) angegeben.

b) Herstellung des elastischen Bindemittels

In 94 Teilen einer 50 %igen Dispersion gemäß Beispiel 1b, werden unter Rühren 6 Teile des Zinkaminkomplexes gemäß Beispiel 4a) innerhalb von 10 Minuten zugetropft. Man erhält eine Dispersion eines Feststoffgehaltes von 49,6 % und eines pH-Werts von 9,9.
Kennzahlen eines daraus hergestellten 500 μm dicken Films

```
Wasseraufnahme nach 24 Stunden          18 %
Reißkraft bei -10°C                      12,2 N/mm²
Reißdehnung bei -10°C                    390  N/mm²
Klebrigkeit des Films                     0 - 1
```

Vergleichsbeispiel A

Ein Film einer Dicke von 500 μm aus der in Beispiel 1b eingesetzten 50 %igen Polymerdispersion ohne Zusatz eines polymeren Zinkaminkomplexes zeigt folgende Eigenschaften
Reißkraft bei -10°C          1,2 N/mm²
Reißdehnung bei -10°C        >900 %
Kleibrigkeit bei 23°C        5

Vergleichsbeispiel B

Zu 96 Teile der in Beispiel 1b eingesetzten 50 %igen Polymerdispersion werden unter Rühren 4 Teile einer Zinktetraminhydrogencarbonat-Lösung gegeben, die wie folgt hergestellt wurde: 280 Teile 25 %igen Ammoniak, 110 Teile Ammoniumhydrogencarbonat und 110 Teile Zinkoxid wurden unter Rühren gemischt, wobei das Zinkoxid in Lösung ging.

```
Reißkraft bei -10°C                     10 N/mm²
Reißdehnung bei -10°C                   530 %
Wasseraufnahme nach 24 Stunden          12 %
Klebrigkeit                              4 (9,2 Jm⁻²)
Glastemperatur                         -22°C
```

Mit dem Gemisch wurde nach dem in Beispiel 1c angegebenen Rezept eine Farbe hergestellt. Eine damit erhaltene 500 μm dicke Beschichtung hat folgende Kenndaten:
Reißkraft bei -10°C          8,2 N/mm²
Reißdehnung bei -10°C        140 %
Verschmutzung               4 - 5

Vergleichsbeispiel C

Die im Beispiel 2b eingesetzte 50 %ige Polymerdispersion ohne polymeren Zinkaminkomplex ergibt Filme,

EP 0 324 416 B1

die bei einer Dicke von 500 μm folgende Eigenschaften haben:

| | |
|---|---|
| Reißkraft bei -10⁰C | 9,2 N/mm² |
| Reißdehnung bei -10⁰C | 420 % |
| Klebrigkeit bei 23⁰C | 4 - 5 |
| Glastemperatur | -24 ⁰C |
| Wasseraufnahme nach 24 Stunden | 18 % |

Vergleichsbeispiel D

Ein aus der in Beispiel 3b eingesetzten 50 %igen Polymerdispersion ohne polymeren Zinkaminkomplex hergestellter Film einer Dicke von 500 μm zeigt folgende Eigenschaften:

| | |
|---|---|
| Reißkraft bei -10⁰C | 16 N/mm² |
| Reißdehnung bei -10⁰C | 200 % |
| Klebrigkeit | 3 (4,1 J/m²) |
| Wasseraufnahme nach 24 Stunden | 20 %. |

**Patentansprüche**

1. Bindemittel für klebfreie, nicht schmutzende, elastische Beschichtungen auf Basis von wäßrigen Copolymer-Dispersionen, die Zinkaminkomplexe enthalten, dadurch gekennzeichnet, daß sie im wesentlichen aus
(A) 99 bis 90 Gew.% einer (Meth)acrylsäureestercopolymer-Dispersion, deren Polymeres eine Glastemperatur von -40 bis -1°C enthält und
(B) 1 bis 10 Gew.% eines wasserlöslichen Zinkamin-Komplexsalzes einer polymeren Carbonsäure bestehen, wobei die Angaben in Gew.% auf die gesamte Polymerenmenge bezogen sind.
2. Bindemittel nach Anspruch 1, dadurch gekennzeichnet, daß das Polymere der Komponente (A) 0,5 bis zu 4 Gew.% α,β- ethylenisch ungesättigte, carboxylgruppenhaltige Monomere einpolymerisiert enthält.
3. Bindemittel nach Anspruch 1, dadurch gekennzeichnet, daß das Polymere der Komponente (A) 0,5 bis 4 Gew.% carbonylgruppenhaltige Monomere einpolymerisiert enthält und die Komponente (A) 0,8 bis 1,2 Val/Val Carbonylgruppe des Polymeren einer Dihydrazidverbindung enthält.
4. Bindemittel nach Anspruch 1, dadurch gekennzeichnet, daß die Komponente (A) bis zu 4 Gew.% einer polyfunktionellen α,ß-ethylenisch ungesättigten Verbindung einpolymerisiert enthält.

**Claims**

1. A binder for non-tacky, non-soiling, flexible coatings based on an aqueous copolymer dispersion which contains a zinc-amine complex, wherein the said binder essentially consists of
(A) from 99 to 90% by weight of a (meth)acrylate copolymer dispersion whose polymer has a glass transition temperature of from -40 to -1°C and
(B) from 1 to 10% by weight of a water-soluble zincamine complex salt of a polymeric carboxylic acid, the percentages by weight being based on the total amount of polymer.
2. A binder as claimed in claim 1, wherein the polymer of component (A) contains from 0. 5 to 4% by weight of α,β-ethylenically unsaturated, carboxyl-containing monomers as copolymerized units.
3. A binder as claimed in claim 1, wherein the polymer of component (A) contains from 0.5 to 4% by weight of carbonyl-containing monomers as copolymerized units, and component (A) contains from 0.8 to 1.2 equivalents of a dihydrazide compound per equivalent of carbonyl groups of the polymer.
4. A binder as claimed in claim 1, wherein component (A) contains up to 4% by weight of a polyfunctional

8

α,β-ethylenically unsaturated compound as copolymerized units.

## Revendications

1. Liants pour revêtements élastiques, ne maculant pas, ne collant pas, à base de dispersions aqueuses de copolymères, qui contiennent des complexes de zincamine, caractérisés en ce qu'ils se composent, en essence, de

(A) 99 à 90% en poids d'une dispersion d'un copolymère d'ester d'acide (méth)acrylique, dont le polymère possède une température de transition vitreuse de -40 à -1°C et

(B) 1 à 10% en poids d'un sel complexe de zinc-amine, soluble dans l'eau, d'un acide carboxylique polymérique,

les indications en pourcentages pondéraux se rapportant à la quantité totale des polymères.

2. Liants suivant la revendication 1, caractérisés en ce que le polymère du composant (A) contient, incorporés par polymérisation, de 0,5 jusqu'à 4% en poids de monomères contenant des radicaux carboxyle.

3. Liants suivant la revendication 1, caractérisés en ce que le polymère du composant (A) contient, incorporés par polymérisation, de 0,5 jusqu'à 4% en poids de monomères contenant des radicaux carboxyle et le composant (A) contient de 0,8 à 1,2 val/val de radicaux carbonyle du polymère d'un composé dihydrazide.

4. Liants suivant la revendication 1, caractérisés en ce que le composant (A) contient, incorporés par polymérisation, jusqu'à 4% en poids d'un composé alpha,bêta-éthyléniquement insaturé, polyfonctionnel.